# EUROPÄISCHE PATENTSCHRIFT

(11) **EP 1 674 241 B1**
(45) Veröffentlichungstag und Bekanntmachung des Hinweises auf die Patenterteilung: **02.07.2008**
(21) Anmeldenummer: 04030282.0
(22) Anmeldetag: 21.12.2004
(51) Int. Cl.: B29C 57/06, F16L 47/06

(54) **Rohraufweitung**
Pipes enlarging
Etirage radial de tubes

(43) Veröffentlichungstag der Anmeldung: 28.06.2006
(73) Patentinhaber: Uponor Innovation AB, 513 81 Fristad (SE)
(72) Erfinder: Brägelmann, Peter, 48607 Ochtrup (DE); Freermann, Reinhold, 48607 Ochtrup (DE)
(74) Vertreter: von Kreisler Selting Werner

(56) Entgegenhaltungen:
- PATENT ABSTRACTS OF JAPAN Bd. 002, Nr. 063 (M-019), 13. Mai 1978 (1978-05-13) -& JP 53 024121 A (MITSUBISHI PLASTICS IND LTD), 6. März 1978 (1978-03-06)
- PATENT ABSTRACTS OF JAPAN Bd. 003, Nr. 011 (C-035), 30. Januar 1979 (1979-01-30) -& JP 53 134077 A (KUBOTA LTD), 22. November 1978 (1978-11-22)
- PATENT ABSTRACTS OF JAPAN Bd. 018, Nr. 083 (M-1558), 10. Februar 1994 (1994-02-10) -& JP 05 293887 A (SEKISUI CHEM CO LTD), 9. November 1993 (1993-11-09)
- PATENT ABSTRACTS OF JAPAN Bd. 002, Nr. 140 (C-028), 18. November 1978 (1978-11-18) -& JP 53 105575 A (SEKISUI CHEM CO LTD), 13. September 1978 (1978-09-13)

## Beschreibung

Die Erfindung betrifft ein Verfahren zum Aufweiten eines Kunststoff- oder Kunststoff-Metall-Verbundrohres, ein Aufweitwerkzeug für ein solches Rohr sowie die Verwendung einer aufweitbaren Hülse bei der Aufweitung eines Rohres vom zuvor genannten Typ. Ferner betrifft die Erfindung einen Fitting für den Anschluss eines Kunststoff- oder Kunststoff-Metall-Verbundrohres mit einer Glättungshülse.

Im Stand der Technik existieren Fittingsysteme für Kunststoff- oder Kunststoff-Metall-Verbundrohre, bei denen das anzuschließende Rohr zur Verhinderung einer Querschnittsverengung im aufgeweiteten Zustand an einen Fittingkörper angeschlossen wird. Derartige Anschlusssysteme verfügen über eine Press- oder Schiebehülse, die auf das auf den Fittingkörper aufgeschobene aufgeweitete Rohrende gedrückt werden, um das Rohrende dicht und gegen axiale Zugbeanspruchungen gesichert am Fittingkörper zu halten (siehe z. B. DE-U-200 16 677, DE-U 200 18 579, DE-C 100 13 468, DE-C-101 14 300).

Die Aufweitung des Rohrendes erfolgt mit Hilfe an sich bekannter Aufweitwerkzeuge, die mehrere radial ausfahrbare Aufweitsegmente aufweisen. Diese Aufweitsegmente haben im Wesentlichen die Form eines Kreissektors und liegen in ihren Einrückpositionen aneinander. Durch Eintreiben eines Aufweitdorns im Zentrum der Anordnung der Aufweitsegmente werden diese radial nach außen in ihre Ausrückpositionen bewegt, so dass sie, wenn in einem Rohr angeordnet, dieses in seinem Durchmesser aufweiten.

Ein gewisser Nachteil bei der Aufweitung von Kunststoff- oder Kunststoff-Metall-Verbundrohren, die ein Kunststoff-Basisrohr aufweisen, besteht darin, dass sich die Aufweitsegmente in die Innenseite des Kunststoffrohres bzw. Kunststoff-Basisrohres hineindrücken, wodurch es an der Innenseite des Rohres zu Inhomogenitäten kommt. Hierdurch kann es zu Abdichtungsproblemen des aufgeweiteten Rohres am Fittingkörper kommen. Dem könnte durch Aufbringen erhöhter radialer Andrückkräfte, wie sie durch die Press- oder Schiebehülse des Fittings erzeugt werden, entgegengewirkt werden. Dies ist allerdings nicht immer erwünscht und mit einem zusätzlichen Aufwand verbunden.

Aus PATENT ABSTRACTS OF JAPAN Bd. 002, Nr. 063 (M-019), 13. Mai 1978 (1978-05-13) & JP 53 024121 A (MITSUBISHI PLASTICS IND LTD), 6. März 1978 (1978-03-06) ist es bekannt, in das aufgeweitete Ende eines Rohres eine nach außen weisende Sicke für die Aufnahme eines Innen-O-Rings einzuarbeiten. Zu diesem Zweck wird in das aufgeweitete Rohrende eine Hülse eingeschoben, gegen die die Segmente eines Aufweitwerkzeuges drücken, welche die Sicke formen. Zur Formung der Sicke gehören auch außenliegende Gegenformen. Die eingesetzte Innenhülse verbleibt in dem aufgeweiteten Rohr, nachdem das Aufweitwerkzeug entfernt worden ist. Durch die Verformung der Wandung der Innenhülse als auch des Rohres in seinem aufgeweiteten Abschnitt zur Bildung der innenliegenden Aufnahmenut für den O-Ring ist die Innenhülse formschlüssig im aufgeweiteten Rohrende gehalten.

Eine Aufgabe der Erfindung ist es, die Aufweitung eines Kunststoff- oder Kunststoff-Metall-Verbundrohres derart vorzunehmen, dass Inhomogenitäten an der Innenseite des aufgeweiteten Rohrendes weitestgehend vermieden werden.

Zur Lösung dieser Aufgabe wird mit der Erfindung ein Verfahren zum Aufweiten eines Kunststoff- oder Kunststoff-Metall-Verbundrohres mit den Verfahrensschritten des Anspruchs 1 vorgeschlagen.

Ferner dient zur Lösung der Aufgabe ein Aufweitwerkzeug für ein Kunststoff- oder Kunststoff-Metall-Verbundrohr gemäß Anspruch 12.

Schließlich wird zur Lösung der obigen Aufgabe erfindungsgemäß die Verwendung einer aufweitbaren Glättungshülse zum Beibehalten der Homogenität der Innenseite eines aufzuweitenden Rohres beim Aufweiten gemäß Anspruch 15 vorgeschlagen.

Zusätzlich dient der Lösung der obigen Aufgabe auch ein Fitting für den Anschluss eines Kunststoff- oder Kunststoff-Metall-Verbundrohres nach Anspruch 18.

In den Unteransprüchen sind verschiedene Weiterbildungen der Erfindung angegeben.

Erfindungsgemäß wird für das Aufweiten eines Kunststoff- oder Kunststoff-Metall-Verbundrohres also vorgeschlagen, zwischen dem in dem aufzuweitenden Rohr anzuordnenden Aufweitwerkzeug und der Innenseite des aufzuweitenden Rohres eine Glättungshülse anzuordnen, die ein plastisch verformbares oder elastisch verformbares, d. h. rückstellfähiges (z. B. Gummi-)Material aufweist. Um ein Rohr einer bestimmten Dimension erfindungsgemäß aufzuweiten, benötigt man also ein Aufweitwerkzeug, dessen durch die Aufweitsegmente in deren Einrückpositionen definierte Querschnittsfläche kleiner ist als der Innenquerschitt des aufzuweitenden Rohres. In den Ringzwischenraum zwischen dem Aufweitwerkzeug und dem Rohr wird nun die Glättungshülse eingesetzt, deren Wanddicke insbesondere so bemessen ist, dass sie diesen Zwischenraum im Wesentlichen ausfüllt. Bei Betätigung des Aufweitwerkzeuges, also bei Bewegung der Aufweitsegmente radial in deren Ausrückpositionen werden also nun Glättungshülse und Rohr aufgeweitet. Dabei drücken sich die Aufweitsegmente in die Innenseite der Glättungshülse, deren verformbares Material verhindert, dass sich diese Inneneindrückungen als Außenerhebungen an der Außenseite der Glättungshülse abbilden, was wiederum zu einer Inhomogenität der Innenseite des aufgeweiteten Rohres führen würde. Durch die Glättungs- bzw. Ausgleichshülse kann also die Homogenität des Rohres an dessen Innenseite während des Aufweitvorganges im Wesentlichen beibehalten werden. Die Innenseite des erfindungsgemäß aufgeweiteten Rohres weist also im Wesentlichen eine zylindrische Form auf und weist insbesondere nicht die Eindrückungen auf, mit denen es versehen sein könnte, wenn die Aufweitsegmente direkt an der Innenseite des Rohres angreifen würden.

Als Material für die Glättungshülse eignet sich insbesondere ein thermoplastischer oder thermoelastischer Kunststoff oder ein Elastomer. Vorzugsweise besteht die Wandung der Glättungshülse durchgehend aus ein und demselben verformbaren Material.

Die Erfindung ist insbesondere bei sämtlichen Rohren einsetzbar, die über ein Basisrohr aus einem Kunststoffmaterial verfügen. Dieses Kunststoffmaterial kann vernetzt oder unvernetzt, plastisch oder elastisch sein. Insbesondere anwendbar ist die Erfindung allerdings bei Kunststoff-Metall-Verbundrohren, die in ihrer Rohrwandung als Diffusionssperre eine Metalllage aus insbesondere Aluminium oder einer Aluminiumlegierung aufweisen. Diese Metalllage verleiht dem Rohr eine größere Widerstandskraft gegenüber radialen Aufweitungen. Daher drücken sich die Aufweitsegmente bei dieser Art von Rohren besonders stark in die Innenseite des Basisrohres hinein, wenn ohne erfindungsgemäße Glättungs- bzw. Ausgleichshülse gearbeitet wird.

Bei der Einbringung des Aufweitwerkzeuges in ein erfindungsgemäß aufzuweitendes Rohr kann beispielsweise so verfahren werden, dass die Glättungshülse zunächst auf das Aufweitwerkzeug aufgesetzt wird und beide zusammen alsdann in das aufzuweitende Rohr eingeführt werden. Es ist aber auch möglich, zunächst nur die Glättungshülse in das aufzuweitende Rohr einzuschieben, um dann wiederum in die Glättungshülse das Aufweitwerkzeug einzusetzen.

Die Glättungshülse ist zweckmäßigerweise so dimensioniert, dass ihre Außenseite die Innenseite des aufzuweitenden Rohres berührt. Zusätzlich kann die Wanddecke der Glättungshülse zweckmäßigerweise so dimensioniert sein, dass das Aufweitwerkzeug bei nicht ausgerückten Aufweitsegmenten die Innenseite der Glättungshülse berührt.

Wie bereits oben erwähnt, sind die im Handel befindlichen Aufweitwerkzeuge mit Aufweitsegmentaufsätzen versehen, die wiederum in ihrer Querschnittsform in ihrer Einrückposition auf den Innendurchmesser, d. h. auf die Dimension, des aufzuweitenden Rohres abgestimmt sind. Erfindungsgemäß kann nun zum Aufweiten eines Rohres einer bestimmten Dimension der Aufweitsegmentaufsatz für ein Rohr der nächstkleineren Dimension verwendet werden, wobei der sich bildende Ringzwischenraum durch die Glättungshülse ausgefüllt wird.

Die Erfindung wird nachfolgend anhand der Zeichnung näher erläutert. Im einzelnen zeigen dabei:
- Fig. 1: eine Ansicht auf ein Rohr mit eingesetztem aber noch nicht aufgespreiztem Aufweitwerkzeug nach dem Stand der Technik,

- Fig. 2: das Rohr mit eingesetztem und aufgespreiztem Aufweitwerkzeug gemäß dem Stand der Technik,
- Fig. 3: eine Ansicht auf das aufgeweitete Rohr bei entferntem Aufspreizwerkzeug und mit erkennbaren Inhomogenitäten an der Rohrinnenseite,
- Fig. 4: eine Ansicht auf ein aufzuweitendes Rohr mit darin eingesetztem, nicht aufgespreiztem Aufweitwerkzeug und einer Glättungs- bzw. Ausgleichshülse zwischen dem Aufweitwerkzeug und dem Rohr gemäß einem Ausführungsbeispiel der Erfindung,
- Fig. 5: eine Ansicht auf das aufgeweitete Rohr mit Ausgleichs- bzw. Glättungshülse und aufgespreiztem Aufweitwerkzeug und
- Fig. 6: eine stirnseitige Ansicht des erfindungsgemäß aufgeweiteten Rohres nach Entfernung des Aufweitwerkzeuges und der Ausgleichshülse.

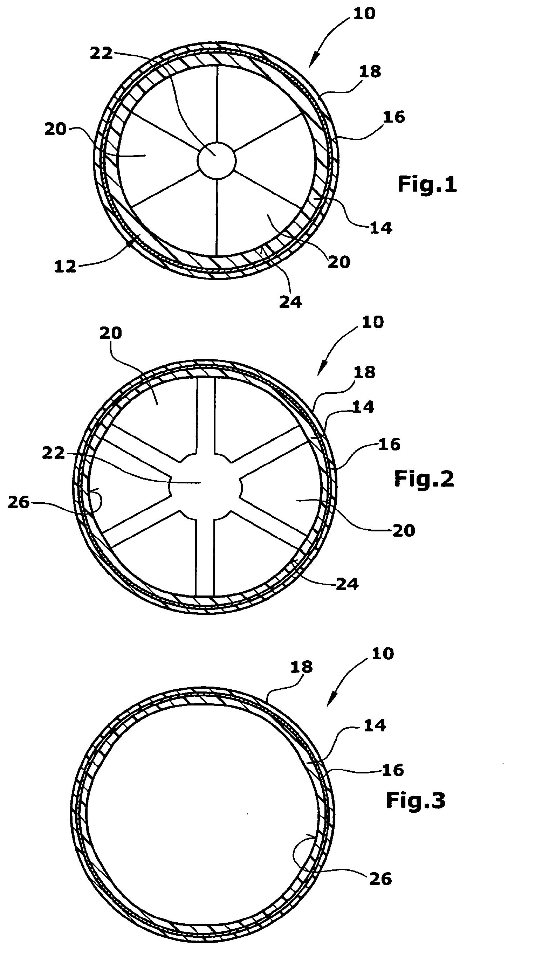

Bevor auf die Erfindung eingegangen wird, soll nachfolgend kurz anhand der Fign. 1 bis 3 die Situation bei der Aufweitung eines Kunststoff-Metall-Verbundrohres 10 durch ein direkt an diesem angreifbaren Aufweitwerkzeug 12 geschildert werden.

Das Rohr 10 weist ein innenliegendes Basisrohr 14 aus einem verformbaren Kunststoffmaterial, beispielsweise vernetztem Polyethylen oder Polypropylen auf, das von einer Metalllage 16 aus beispielsweise Aluminium oder einer Aluminiumlegierung umschlossen ist. Außen um die Metalllage 16 befindet sich ein Kunststoffaußenrohr 18 aus ebenfalls einem Kunststoffmaterial, beispielsweise vernetztem Polyethylen oder Polypropylen.

Soll ein derartiges Rohr 10 radial aufgeweitet werden, so wird das in den Fign. 1 und 2 gezeigte Aufweitwerkzeug 12 in das Rohr 10 eingebracht. Das Aufweitwerkzeug 12 weist mehrere (im Ausführungsbeispiel sechs) Aufweitsegmente 20 auf, die die Form von Sektoren eines Scheibenkörpers aufweisen und zwischen einer Einrückposition, in der benachbarte Aufweitsegmente 20 aneinander liegen (siehe Fig. 1) und einer Ausrückposition, in der die Aufweitsegmente 20 radial auswärts bewegt und in Umfangsrichtung voneinander beabstandet sind (siehe Fig. 2), bewegbar sind. Die Ausrückbewegung der Aufweitsegmente 20 erfolgt, indem in die zentrale Öffnung 22, die sich zwischen sämtlichen Aufweitsegmenten 20, in deren Einrückpositionen bildet, ein (nicht dargestellter) Dorn hineinbewegt wird, der beispielsweise konisch ausgebildet ist, um mit zunehmendem Eindringen in die Öffnung 22 die Aufweitsegmente 20 auseinander zu bewegen.

Fig. 2 zeigt die Situation nach Beendigung der radialen Ausrückbewegungen der Aufweitsegmente 20. Deren Außenflächen 24 drücken beim Aufweitvorgang gegen die Innenseite 26 des Rohres 10. Dabei "arbeiten" sich die Aufweitsegmente 20 in die Innenseite 26 des Rohres 10 ein, so dass es zu Einprägungen und damit zu einer Abweichung der Innenseite 26 des Rohres 10 von einer Zylinderform kommt (Inhomogenitäten). Diese Inhomogenitäten sind auch in Fig. 3 zu erkennen.

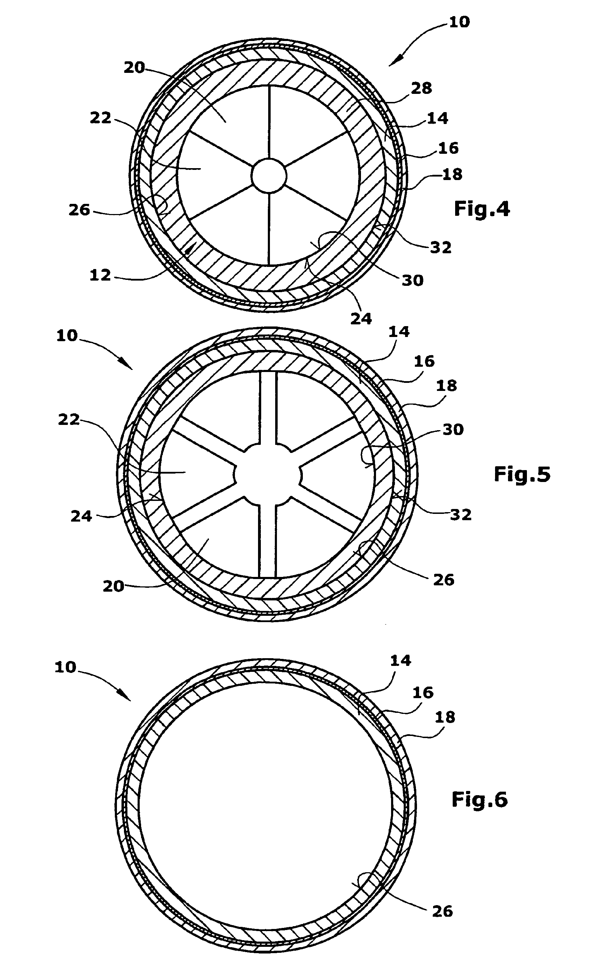

Anhand der Fign. 4 und 6 ist erkennbar, wie die Bildung von Inhomogenitäten an der Innenseite 26 des Rohres 10 erfindungsgemäß durch eine Ausgleichs- bzw. Glättungshülse 28 weitestgehend verhindert werden können. Soweit in den Fign. 4 bis 6 für die dort gezeigten Bestandteile die gleichen Bezugszeichen wie in den Fign. 1 bis 3 verwendet werden, sind mit diesen Bezugszeichen gleiche bzw. funktionsgleiche Elemente bezeichnet.

Im Unterschied zur Situation gemäß den Fign. 1 bis 3 wird nach der Erfindung das Aufweitwerkzeug 12 von der Ausgleichs- bzw. Glättungshülse 28 umgeben, die aus einem elastisch oder plastisch verformbaren Material (z. B. Kunststoff oder auch (Weich-)Metall) besteht bzw. dieses aufweist. Beispielsweise weist die Glättungshülse 28 ein thermoelastisches oder thermoplastisches Kunststoffmaterial auf. Die Glättungshülse 28 ist zusammen mit dem Aufweitwerkzeug 12 in das aufzuweitende Rohr eingesetzt. Wenn nun die Aufweitsegmente 20 radial ausgerückt werden (siehe Fig. 5) werden die Glättungshülse 28 und das Rohr 10 gemeinsam aufgeweitet. Dabei drücken sich die Aufweitsegmente 20 in die Innenseite 30 der Glättungshülse 28 hinein, deren Außenseite 32 gegen die Innenseite 26 des Rohres 20 drückt. Durch den durch die Wandung der Glättunghülse 28 zur Verfügung gestellte Materialpuffer und die Verformbarkeit dieses Materials wird verhindert, dass sich die Eindrückungen auf der Innenseite 30 der Glättungshülse 28 auf deren Außenseite 32 übertragen, was wiederum dazu führt, dass die Innenseite 26 des Rohres 10 auch in dessen aufgeweitetem Zustand im Wesentlichen zylinderförmig ist. Dies ist anhand der Fig. 5 und insbesondere anhand der Fig. 6 zu erkennen.

Die Glättungshülse 28 kann als hohlzylindrisches Rohrstück ausgebildet sein. Damit die Glättungshülse 28 eine definierte Lage im aufzuweitenden Rohrende aufweist, ist es von Vorteil, die Glättungshülse an einem ihrer axialen Enden mit einem Außenflansch zu versehen, der als Anschlag für das Stirnende des Rohres dient. Alternativ bzw. zusätzlich kann die Glättungshülse konisch ausgebildet sein, um über einen Reibschluss mit dem Rohrende zu erreichen, dass die Glättungshülse nicht weiter als für den Aufweitungsbereich notwendig in das Rohr einschiebbar sind.

## Patentansprüche

1. Verfahren zum Aufweiten eines Kunststoff- oder Kunstoff-Metall-Verbundrohres, bei dem
- eine aufweitbare Glättungshülse (28) zwischen ein Aufweitwerkzeug (12), das mehrere ausrückbare Aufweitsegmente (20) aufweist, und dem aufzuweitenden Rohr (10) eingebracht wird,
- das Rohr (10) durch Überführung der sich in der Glättungshülse (28) befindenden Aufweitsegmente (20) in deren Ausrückpositionen im Wesentlichen unter Beibehaltung der Homogenität der Innenseite (26) des Rohres (10), an der die Glättungshülse (28) bei der Aufweitung mit ihrer Außenseite (32) anliegt, aufgeweitet wird, und
- das Aufweitwerkzeug (12) und die Glättungshülse (28) aus dem aufgeweiteten Rohr (10) entfernt werden.

2. Verfahren nach Anspruch 1, **dadurch gekennzeichnet, dass** die Glättungshülse (28) in das aufzuweitende Rohr (10) eingesetzt wird und anschließend in die Glättungshülse (28) das Aufweitwerkzeug (12) eingesetzt wird.

3. Verfahren nach Anspruch 1, **dadurch gekennzeichnet, dass** die Glättungshülse (28) mit sich in dieser befindendem Aufweitwerkzeug (12) in das aufzuweitende Rohr (10) eingesetzt wird.

4. Verfahren nach einem der Ansprüche 1 bis 3, **dadurch gekennzeichnet, dass** die Glättungshülse (28) ein elastisch verformbares Material aufweist.

5. Verfahren nach einem der Ansprüche 1 bis 3, **dadurch gekennzeichnet, dass** die Glättungshülse (28) ein plastisch verformbares Material aufweist.

6. Verfahren nach einem der Ansprüche 1 bis 3, **dadurch gekennzeichnet, dass** die Glättungshülse (28) ein thermoplastisches, thermoelastisches oder ein elastomeres Material aufweist.

7. Verfahren nach einem der Ansprüche 1 bis 6, **dadurch gekennzeichnet, dass** die Glättungshülse (28) derart dimensioniert ist, dass sie vor Ihrer Aufweitung mit ihrer Außenseite (32) die Innenseite (26) des aufzuweitenden Rohres (10) berührt.

8. Verfahren nach einem der Ansprüche 1 bis 7, **dadurch gekennzeichnet, dass** die Glättungshülse (28) derart dimensioniert ist, dass das Aufweitwerkzeug (12) bei nicht ausgerückten Aufweitsegmenten (20) die Innenseite (30) der Glättungshülse (28) berührt.

9. Verfahren nach einem der Ansprüche 1 bis 8, **dadurch gekennzeichnet, dass** die Glättungshülse (28) zumindest über einen Teil ihrer axialen Erstreckung konisch ist.

10. Verfahren nach einem der Ansprüche 1 bis 9, **dadurch gekennzeichnet, dass** die Glättungshülse (28) einen Außenvorsprung als Anschlag für das Stirnende des aufzuweitenden Rohres (10) aufweist.

11. Verfahren nach Anspruch 10, **dadurch gekennzeichnet, dass** die Glättungshülse (28) als Anschlag einen Außenflansch an einem ihrer axialen Enden aufweist.

12. Aufweitwerkzeug für ein Kunststoff- oder Kunststoff-Metall-Verbundrohr, mit
- mehreren Aufweitsegmenten (20), die eine im Wesentlichen rotationssymmetrische Anordnung bilden und die zwischen einer Einrückposition zum Einführen in das aufzuweitende Rohr (10) und einer Ausrückposition zum Aufweiten des Rohres (10) radial bewegbar angeordnet sind, und
- einer aufweitbaren Glättungshülse (28),
- wobei die Glättungshülse (28) zwischen die sich in ihren Einrückpositionen befindenden Aufweitsegmente (20) und das aufzuweitende Rohr (10) einbringbar und nach dem Aufweiten des Rohres (10) aus diesem entfernbar ist.

13. Aufweitwerkzeug nach Anspruch 12, **dadurch gekennzeichnet, dass** die Glättungshülse (28) derart dimensioniert ist, dass sie vor ihrer Aufweitung mit ihrer Außenseite (32) die Innenseite (26) des aufzuweitenden Rohres (10) berührt.

14. Aufweitwerkzeug nach Anspruch 12 oder 13, **dadurch gekennzeichnet, dass** die Glättungshülse (28) derart dimensioniert ist, dass das Aufweitwerkzeug (12) bei nicht ausgerückten Aufweitsegmenten (20) die Innenseite (30) der Glättungshülse (28) berührt.

15. Verwendung einer aufweitbaren Glättungshülse (28) zum Beibehalten der Homogenität der Innenseite (26) eines aufzuweitenden Rohres (10) beim Aufweiten durch ein Aufweitwerkzeug (12) durch Einbringen der Glättungshülse (28) zwischen das Aufweitwerkzeug (12) und das aufzuweitende Rohr (10), anschließendes Betätigen des Aufweitwerkzeuges (12) zwecks Aufweitung von Glättungshülse (28) und Rohr (10) und Entfernen des Aufweitwerkzeuges (12) und der Glättungshülse (28) aus dem aufgeweiteten Rohr (12).

16. Verwendung nach Anspruch 15, **dadurch gekennzeichnet, dass** die Glättungshülse (28) in das aufzuweitende Rohr (10) eingesetzt wird und anschließend in die Glättungshülse (28) das Aufweitwerkzeug (12) eingesetzt wird.

17. Verwendung nach Anspruch 15, **dadurch gekennzeichnet, dass** die Glättungshülse (28) mit sich in dieser befindendem Aufweitwerkzeug (12) in das aufzuweitende Rohr (10) eingesetzt wird.

18. Fitting für den Anschluss eines Kunststoff- oder Kunststoff-Metall-Verbundrohres, mit
- einem Fittingkörper, von dem eine Stützhülse absteht, auf welche ein aufgeweitetes Ende des anzuschließenden Rohres (10) aufschiebbar ist, und
- einer aufweitbaren Glättungshülse (28), die zum Aufweiten des Rohrendes (10) durch ein Aufweitwerkzeug (12) zwischen dieses und das aufzuweitende Rohrende (10) einbringbar und nach dem Aufweiten des Rohres (10) entfernbar ist.

19. Fitting nach Anspruch 18, ferner **gekennzeichnet durch** eine Presshülse zum Drücken des auf die Stützhülse aufgeschobenen aufgeweiteten Rohrendes (10) gegen die Stützhülse.

## Claims

1. A method for expanding a plastic or plastic-metal compound pipe, comprising the steps of
- inserting an expandable smoothing shell (28) between the pipe (10) to be expanded and an expansion tool (12) comprising a plurality of extendable expansion segments (20),
- expanding the pipe (10) by transfer of the expansion segments (20) within the smoothing shell (28) into their extended positions, while substantially maintaining the homogeneity of the inner side (26) of the pipe (10) which during the expansion process is abutted by the outer side (32) of the smoothing shell (28), and
- removing the expansion tool (12) and the smoothing shell (28) from the expanded pipe (10).

2. The method according to claim 1, **characterized by** inserting the smoothing shell (28) into the pipe (10) to be expanded, and subsequently inserting the expansion tool (12) into the smoothing shell (28).

3. The method according to claim 1, **characterized by** inserting the smoothing shell (28) together with the expansion tool (12) arranged therein into the pipe (10) to be expanded.

4. The method according to any one of claims 1 to 3, **characterized in that** the smoothing shell (28) comprises an elastically deformable material.

5. The method according to any one of claims 1 to 3, **characterized in that** the smoothing shell (28) comprises a plastically deformable material.

6. The method according to any one of claims 1 to 3, **characterized in that** the smoothing shell (28) comprises a thermoplastic, thermoelastic or elastomeric material.

7. The method according to any one of claims 1 to 6, **characterized in that** the smoothing shell (28) has such dimensions that, prior to being expanded, the smoothing shell is by its outer side (32) in contact with the inner side (26) of the pipe (10) to be expanded.

8. The method according to any one of claims 1 to 7, **characterized in that** the smoothing shell (28) has such dimensions that, in the non-extended condition of the expansion segments (20), the expansion tool (12) is in contact with the inner side (30) of the smoothing shell (28).

9. The method according to any one of claims 1 to 8, **characterized in that** the smoothing shell (28) is of a conical shape at least along a part of its axial length.

10. The method according to any one of claims 1 to 9, **characterized in that** the smoothing shell (28) is provided with an outer projection serving as an abutment for the end face of the pipe (10) to be expanded.

11. The method according to claim 10, **characterized in that** the smoothing shell (28) is provided with an outer flange on one of its axial ends for use as an abutment.

12. An expansion tool for a plastic or plastic-metal compound pipe, comprising
- a plurality of expansion segments (20) forming a substantially rotationally symmetrical configuration and arranged for radial movement between a retracted position for insertion into the pipe (10) to be expanded, and an extended position for expanding the pipe (10),
- an expandable smoothing shell (28),
- the smoothing shell (28) being insertable between the expansion segments (20) arranged in their retracted positions and the pipe (10) to be expanded, and being removable from the pipe (10) after expansion of the pipe.

13. The expansion tool according to claim 12, **characterized in that** the smoothing shell (28) has such dimensions that, prior to being expanded, the smoothing shell is by its outer side (32) in contact with the inner side (26) of the pipe (10) to be expanded.

14. The expansion tool according to claim 12 or 13, **characterized in that** the smoothing shell (28) has such dimensions that, in the non-extended condition of the expansion segments (20), the expansion tool (12) is in contact with the inner side (30) of the smoothing shell (28).

15. Use of an expandable smoothing shell (28) for maintaining the homogeneity of the inner side (26) of a to-be-expanded pipe (10) while the pipe is being expanded by an expansion tool (12), said expandable smoothing shell (28) being used by inserting it between the expansion tool (12) and the pipe (10) to be expanded, subsequently operating the expansion tool (12) for expanding the smoothing shell (28) and the pipe (10), and removing the expansion tool (12) and the smoothing shell (28) from the expanded pipe (10).

16. The use according to claim 15, **characterized by** inserting the smoothing shell (28) into the pipe (10) to be expanded, and subsequently inserting the expansion tool (12) into the smoothing shell (28).

17. The use according to claim 15, **characterized by** inserting the smoothing shell (28) together with the expansion tool (12) arranged therein into the pipe (10) to be expanded.

18. A fitting for connection of a plastic or plastic-metal compound pipe, comprising
- a fitting body having a support shell projecting therefrom, said support shell being adapted for mounting thereon an expanded end of said pipe (10) to be connected, and
- an expandable smoothing shell (28) which, for expanding the pipe end (10), is adapted to be inserted by means of an expansion tool (12) between said tool and said to-be-expanded pipe end (10), and to be removed after the expanding of the pipe (10).

19. The fitting according to claim 18, further **characterized by** a press shell for pressing the expanded pipe end (10) mounted to said support shell against the support shell.

## Revendications

1. Procédé pour élargir un tube en matière plastique ou en un composite de matière plastique et de métal, selon lequel
- une douille de lissage (28) élargissable est introduite entre un outil d'élargissement (12), qui présente plusieurs segments d'élargissement (20) pouvant être sortis par dissociation, et le tube (10) à élargir ;
- le tube (10) est élargi par transfert dans leurs positions sorties, des segments d'élargissement (20) se trouvant dans la douille de lissage (28), sensiblement avec conservation de l'homogénéité de la face intérieure (26) du tube (10), contre laquelle la douille de lissage (28) porte avec sa face extérieure (32), lors de l'élargissement, et
- l'outil d'élargissement (12) et la douille de lissage (28) sont retirés du tube élargi (10).

2. Procédé selon la revendication 1, **caractérisé en ce que** la douille de lissage (28) est insérée dans le tube (10) à élargir et l'outil d'élargissement (12) est ensuite inséré dans la douille de lissage (28).

3. Procédé selon la revendication 1, **caractérisé en ce que** la douille de lissage (28) est, avec l'outil d'élargissement (12) se trouvant dedans, insérée dans le tube (10) à élargir.

4. Procédé selon l'une des revendications 1 à 3, **caractérisé en ce que** la douille de lissage (28) présente un matériau élastiquement déformable..

5. Procédé selon l'une des revendications 1 à 3, **caractérisé en ce que** la douille de lissage (28) présente un matériau plastiquement déformable.

6. Procédé selon l'une des revendications 1 à 3, **caractérisé en ce que** la douille de lissage (28) présente un matériau thermoplastique, thermoélastique ou élastomère.

7. Procédé selon l'une des revendications 1 à 6, **caractérisé en ce que** la douille de lissage (28) est dimensionnée de telle manière qu'avant son élargissement, elle soit en contact, par sa face extérieure (32), avec la face intérieure (26) du tube (10) à élargir.

8. Procédé selon l'une des revendications 1 à 7, **caractérisé en ce que** la douille de lissage (28) est dimensionnée de telle manière que l'outil d'élargissement (12), lorsque les segments d'élargissement (20) ne sont pas sortis, soit en contact avec la face intérieure (30) de la douille de lissage (28).

9. Procédé selon l'une des revendications 1 à 8, **caractérisé en ce que** la douille de lissage (28) est conique sur au moins une partie de sa dimension axiale.

10. Procédé selon l'une des revendications 1 à 9, **caractérisé en ce que** la douille de lissage (28) présente une saillie extérieure constituant une butée pour l'extrémité frontale du tube (10) à élargir.

11. Procédé selon la revendication 10, **caractérisé en ce que** la douille de lissage (28) présente comme butée, une collerette extérieure à l'une de ses extrémités axiales.

12. Outil d'élargissement pour un tube en matière plastique ou en un composite de matière plastique et de métal, comprenant
- plusieurs segments d'élargissement (20), qui forment un ensemble présentant sensiblement une symétrie de révolution et qui sont montés déplaçables en direction radiale, entre une position rentrée, pour l'engagement dans le tube (10) à élargir, et une position sortie, pour l'élargissement du tube (10), et
- une douille de lissage (28) élargissable,
- la douille de lissage (28) pouvant être introduite entre les segments d'élargissement (20) se trouvant dans leurs positions rentrées et le tube (10) à élargir, et en être retirée après l'élargissement du tube (10).

13. Outil d'élargissement selon la revendication 12, **caractérisé en ce que** la douille de lissage (28) est dimensionnée de telle manière qu'avant son élargissement, elle soit en contact, par sa face extérieure (32), avec la face intérieure (26) du tube (10) à élargir.

14. Outil d'élargissement selon la revendication 12 ou 13, **caractérisé en ce que** la douille de lissage (28) est dimensionnée de telle manière que l'outil d'élargissement (12), lorsque les segments d'élargissement (20) ne sont pas sortis, soit en contact avec la face intérieure (30) de la douille de lissage (28).

15. Utilisation d'une douille de lissage (28) élargissable, pour maintenir l'homogénéité de la face intérieure (26) d'un tube (10) à élargir, lors de son élargissement au moyen d'un outil d'élargissement (12), par introduction de la douille de lissage (28) entre l'outil d'élargissement (12) et le tube (10) à élargir, actionnement consécutif de l'outil d'élargissement (12) dans le but d'élargir la douille de lissage (28) et le tube (10), et retrait de l'outil d'élargissement (12) et de la douille de lissage (28) du tube élargi (10).

16. Utilisation selon la revendication 15, **caractérisé en ce que** la douille de lissage (28) est insérée dans le tube (10) à élargir et l'outil d'élargissement (12) est ensuite inséré dans la douille de lissage (28).

17. Utilisation selon la revendication 15, **caractérisé en ce que** la douille de lissage (28) est, avec l'outil d'élargissement (12) se trouvant dedans, insérée dans le tube (10) à élargir.

18. Raccord pour le raccordement d'un tube en matière plastique ou en un composite de matière plastique et de métal, comprenant
- un corps de raccord, d'où fait saillie une douille d'appui, sur laquelle une extrémité élargie du tube (10) à raccorder peut être emmanchée, et
- une douille de lissage (28) élargissable, qui en vue de l'élargissement de l'extrémité (10) du tube par un outil d'élargissement (12), peut être introduite entre ce dernier et l'extrémité (10) à élargir du tube, et peut être retirée après l'élargissement du tube (10).

19. Raccord selon la revendication 18, **caractérisé, en outre, par** une douille de sertissage pour presser contre la douille d'appui, l'extrémité (10) élargie du tube, emmanchée sur la douille d'appui.
